(19) **Europäisches Patentamt / European Patent Office / Office européen des brevets**

(11) **EP 2 013 410 B1**

(12) **EUROPEAN PATENT SPECIFICATION**

(45) Date of publication and mention
of the grant of the patent:
**01.08.2012 Bulletin 2012/31**

(51) Int Cl.:
***D21C 5/02*** (2006.01)

(21) Application number: **07730694.2**

(22) Date of filing: **19.04.2007**

(86) International application number:
**PCT/FI2007/050207**

(87) International publication number:
**WO 2007/122290 (01.11.2007 Gazette 2007/44)**

(54) **METHOD OF CONTROLLING RECYCLED FIBRE LINE, AND RECYCLED FIBRE LINE**

BETRIEBSVERFAHREN FÜR FASERREZYKLATSTRASSE UND FASERREZYKLATSTRASSE

PROCÉDÉ POUR COMMANDER UNE LIGNE DE RECYCLAGE DE FIBRES, ET LIGNE DE RECYCLAGE DE FIBRES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **21.04.2006 FI 20065255**

(43) Date of publication of application:
**14.01.2009 Bulletin 2009/03**

(73) Proprietor: **Metso Automation Oy
01380 Vantaa (FI)**

(72) Inventor: **HUHTELIN, Taisto
33580 Tampere (FI)**

(74) Representative: **TBK
Bavariaring 4-6
80336 München (DE)**

(56) References cited:
**WO-A-95/08019 WO-A-2005/042831
WO-A-2005/103374 CA-A1- 2 414 928
US-A- 6 010 593**

## Description

The method relates to a method of controlling a recycled fibre line according to the preamble of claim 1 and to a recycled fibre line according to the preamble of claim 9.

A recycled fibre line is also called an RCF line (ReCycled Fiber), and it refers to a production process by means of which raw material for printing paper is produced from wastepaper mainly for newspapers and magazines. The process may also be called de-inking. On the RCF line, the intention is to release the fibres of the recycled fibre pulp from each other, to release ink from the fibres and to remove the released ink from the recycled fibre pulp.

Newspapers, leaflets and magazines collected by means of recycling may be used as raw material on an RCF line. An amount of reclaimed paper corresponding to the desired production speed is fed from paper storage along band conveyors to a continuously operating rotating pulper, for example. In pulping, the aim is to detach the fibres of the recycled fibre pulp from each other in chemical and mechanic processing. At the same time, ink is also detached from the fibres. The quality of reclaimed paper varies according to from where and how the paper was collected. The age of paper significantly affects the quality of the resultant recycled fibre pulp. In addition, reclaimed paper contains impurities and its moisture varies.

After pulping, recycled fibre pulp is purified with vortex cleaners and sieves, which are typically rapidly rotating slot sieves. The purified and diluted pulp is led to flotation, whose essential task is to remove free ink by flotation. The aim is then to remove sticky substances with slot sieves. Soiled water is removed by means of a disc filter and pressing apparatuses to further processing, and the obtained, high-consistency pulp is dispersed. The purpose of dispersing is to detach ink particles still attached to the fibres. After dispersing, the recycled fibre pulp is diluted and the detached ink is removed by flotation. Soiled water is removed and the pulp is then bleached and pumped into papermaking.

Since the quality of raw material fed to an RCF line varies largely, the use of chemicals and the mechanical processing are not optimized. The situation is also weakened by the fact that the automation of recycled fibre processes has, however, conventionally been minimal. Accordingly, insufficient adjustment of the RCF line leads to the quality of the end product to be manufactured remaining poorer than what could be achieved with existing devices and raw materials.

WO 95/08019 A shows a generic method of controlling a recycled fibre line according to the preamble of claim 1, comprising a pulping subprocess and a dispersing subprocess, wherein recycled fibre pulp is processed. WO 95/08019 A also shows a generic recycled fibre line according to the preamble of claim 9, comprising a pulping subprocess and a dispersing subprocess, wherein recycled fibre pulp is processed.

Further methods of controlling a recycled fibre line are shown in WO 2005/103374 A, WO 2005/042831 A, US 6 010 593 A, and CA 2 414 928 A1.

It is an object of the invention to further develop a method of controlling a recycled fibre line according to the preamble of claim 1 and a recycled fibre line according to the preamble of claim 9 such that the automation of recycled fibre line processes is increased and that the quality of the recycled fibre line is improved.

The object of the invention is achieved by a method of controlling a recycled fibre line having the features of claim 1 as well as by a recycled fibre line having the features of claim 9.

It is an advantage of the invention to provide a method of controlling a recycled fibre line, comprising a pulping subprocess and a dispersing subprocess, and wherein recycled fibre pulp is processed. The method further comprises measuring at least one characteristic of fibres and at least one characteristic of ink from the recycled fibre pulp of the recycled fibre line, and feeding measurement results to a controller of the pulping subprocess and to a controller of the dispersing subprocess, which perform multivariable-based predictive calculation and optimization of control functions, generating, on the basis of the measurement results in the controller of the pulping subprocess, at least one control variable for mechanic processing of the recycled fibre pulp performed in the pulping subprocess and at least one control variable for chemical processing of the recycled fibre pulp performed in the pulping subprocess, and generating, on the basis of the measurement results in the controller of the dispersing subprocess, at least one control variable on the basis of measurement results in the controller of the dispersing subprocess for mechanical processing of the recycled fibre pulp performed in the dispersing subprocess and at least one control variable for chemical processing of the recycled fibre pulp performed in the dispersing subprocess.

It is a further advantage of the invention to provide a recycled fibre line comprising a pulping subprocess and a dispersing subprocess, and wherein recycled fibre pulp is processed. The recycled fibre line comprises a controller of the pulping subprocess and a controller of the dispersing subprocess, the controllers being adapted to perform multivariable-based predictive calculation and optimization of control functions, measuring devices for measuring at least one characteristic of fibres of the recycled fibre pulp, and at least one characteristic of ink in at least one measuring point, and the measuring devices are adapted to feed measurement results to the controller of the pulping subprocess and to the controller of the dispersing subprocess, the controller of the pulping subprocess is adapted to generate at least one control variable on the basis of measurement results for chemical processing of the recycled fibre pulp performed in the pulping subprocess and at least one control variable for mechanical processing performed in the pulping subprocess, and the controller of the dispersing subprocess is adapted to generate at least one control variable on the basis of the measurement results for chemical processing of the recycled fibre pulp performed in the dispersing subprocess and at least one control variable for mechanical processing of the recycled fibre pulp performed in the dispersing subprocess.

Preferred embodiments of the invention are described in the dependent claims.

The method and system of the invention provide a plurality of advantages. The solution enhances chemical and mechanical processing, thus improving the quality of the end product. The solution presented allows a sufficient detachment work of fibres and ink to be ensured and, at the same time, ensures the homogenous quality of the pulp produced. In addition, it enables the achievement of savings in the consumption of both chemicals and energy. Since the pulp fed to the purification steps is of homogenous quality, the work in the purification subprocesses becomes easier and, consequently, the quality of the pulp fed through it to a paper machine becomes homogenous and the yield of pulp improves. In the paper machine, homogenous pulp ensures an even operation of the short circulation process, whereby the operation of the paper machine is also even and easier to manage. At the same time, this provides a better runability and paper quality.

In the following, the invention will be described in more detail in connection with preferred embodiments with reference to the accompanying drawings, in which

Figure 1 shows an RCF recycled fibre line,
Figure 2 shows a control block diagram,
Figure 3 shows optical measurement,
Figure 4 shows particle distributions at different measuring points,
Figure 5 shows a controller, and
Figure 6 shows a method block diagram.

The solution according to the invention is directed to pulping and dispersing subprocesses and to how well ink can be made to be detached and how well fibres can be separated without breaking fibres. Control models are achieved by measuring the success of this detachment work and by modelling the available mechanic and chemical means. When a cost function regarding optimization is determined in addition, the process can be controlled by the desired method. Since the process includes significant time constants and delays and since the nature of the process is a multivariable process having strong mutual effects, it is natural to select a method found to be suitable for this purpose, such as a model-predictive multivariable control method.

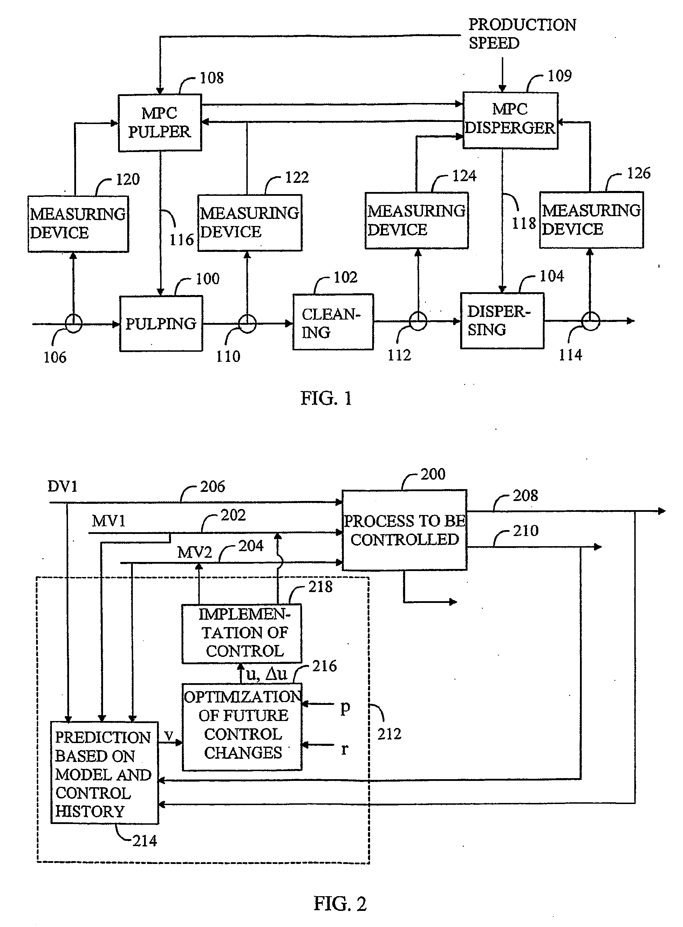

Let us now study an RCF line generally by means of Figure 1. In view of the present solution, the most essential parts of an RCF line are the pulping subprocess and the dispersing subprocess.

The RCF line may comprise the following subprocesses. Initially, raw material obtained from recycling, such as newspapers, leaflets and magazines, may be fed to a pulping subprocess 100, in a continuous pulper or batch pulper comprised by which the raw material is mixed with water in a manner rendering the consistency of the recycled fibre pulp e.g. 5 to 18% depending on the pulping method employed. The pulping subprocess tends to disintegrate the raw material chemically and mechanically into recycled fibre pulp, wherein fibres and Ink are detached into separate particles. Typically the higher the consistency, the more effective is the use of chemicals. The pulping temperature is also important to achieve a good separation.

In a rotating pulper, the pulp rises by means of lifting beams at the periphery of the pulper along with the rotation of the wall up, until gravitation exceeds the centrifugal force. When this happens, the recycled fibre pulp falls down and at the impact the pulp disintegrates and disintegrates recycled fibre pulp remained under it. The falling height of the recycled fibre pulp and, thus, also the impact speed, depend on the speed of rotation of the drum. The pulp spins in the pulper 20 to 40 min. and having passed through the pulper, enters a sieve section, wherein it is diluted to a level of 3.5%. This enables the separation of the largest impurities and non-degradable pieces, such as staples, bits of plastic etc. from the recycled fibre pulp by means of openings (diameter e.g. about 1 cm) in the sieve section. The pieces separated from the recycled fibre pulp end up on a waste conveyor.

Chemicals fed to the pulping subprocess have the following effect. Several chemicals may be fed to the pulping subprocess for detaching particles from each other. The alkalinity of the recycled fibre pulp is raised to the level pH 9 to 10 by means of sodium hydroxide. Sodium hydroxide makes the fibres swell and facilitates the detachment of printing ink. Water glass, i.e. sodium silicate, in turn, improves the detachment of printing ink and prevents ink from reattachment. At the same time, it buffers the pH to the desired level. Hydrogen peroxide, typically used for bleaching pulp, prevents the pulp from yellowing in connection with pulping. In addition, other chemicals may be used, such as surface-active chemicals (Surfactant and the like).

Essential indicators of the success of pulping are: how well have the fibres been detached from each other, did fibres break in pulping, how well has ink been detached from fibres and filling agents and coating paste and how fine has ink been split. These may be affected in pulping mechanically and chemically.

Mechanical means include: speed of travel of pulp in drum, i.e. production speed, consistency of pulp in drum, and speed of rotation of drum. Chemical means include: pH of pulp in drum, based on the dosage of sodium hydroxide, for example, dosage portion of silicate, consistency (amount of water) and temperature of pulp.

After pulping, recycled fibre pulp may be purified with vortex cleaners and sieves, which are typically rapidly rotating slot sieves. The purified and diluted pulp is next led to flotation in the purification subprocess 102, the essential task of which is to remove free ink by flotation. The aim is then to remove sticky substances with slot sieves. Soiled water is removed by means of a disc filter and pressing apparatuses to further processing, and the obtained, high-consistency pulp is dispersed.

A dispersing subprocess 104 serves to further chemically and mechanically detach ink particles adhered to the fibres of the recycled fibre pulp. For mechanical processing, the dispersing mill of the dispersing subprocess comprises a stator and a rotating rotor, whose blades process the pulp. When the pulp passes between the blades, its speed changes rapidly, whereby the fibres are subjected to mechanical stress, which detaches ink from the fibres. At the same time, the purpose is to detach sticky substances from the fibres and to reduce the ink particles. The characteristics of the pulp, such as freeness, may also change depending on the dispersing subprocess (dispersing mill and/or dispersing method).

Essential indicators of the success of dispersing include: how well the fibres have been detached from each other, did fibres break in dispersing, how well has ink been detached from fibres and filling agents and coating paste, and how fine has ink been split. In dispersing, the separation of fibres and ink may be influenced primarily mechanically. Mechanical means include: speed of travel of pulp passing through the dispersing subprocess, i.e. production speed, consistency of pulp in the dispersing subprocess, temperature of pulp in the dispersing subprocess, speed of rotation of rotor, and amount of power fed to the rotor. The amount of power fed into the rotor is typically controlled by controlling a gap between the rotor and the stator, through which the pulp has to be conveyed.

Let us study a general control performing multivariable-based predictive calculation and optimization of control functions, before the operational modes associated with the solution presented are gone through. A control having such principles is MPC control (Model Predictive Control), for example, which is shown in Figure 2. The principle of Figure 2 may be applied also to GPC control (General Predictive Control), but Figure 2 and its description are focused on MPC control for the sake of simplicity. Control is usually based on the optimization of quadratic cost. A process 200, which may be an RCF process or a subprocess of the RCF process, is affected by control variables 202 to 204 and interference(s) 206. Output variables 208 to 210 of the process 200, in turn, may be measured, and the outputs required by the control calculated from these measurement results, for instance fibre flow amount (kg/s) etc. is calculated by means of flow and consistency measurements. Other calculations can also be performed on these output variables by filtering, for example, the purpose being to calculate the operating point of the process at the moment of calculation.

A controller 212 (controllers 108, 109 in Figure 1) may comprise a process model 214 employed together with control history and measurements for generating predictions **v** and **u** relating to the future of the process 200. Instead of a matrix (vector) of starting and/or output variables, the prediction may also depict the state of the process. In this case, based on the history of interference DV1 and control variables MV1 and M2 and by means of the process model 214, output predictions may be calculated that indicate how process-output variables CV1 and CV2 will change during the planned short future, if output variables MV1 and MV2 are not changed.

Incoming target trajectories also belong to the planned short future. Typically, the process is run by means of these target trajectories from a detected operating point to a new desired operating point.

Optimization of incoming control variables deal with differences between target trajectories and output predictions as regards the planned short future. The calculated difference is minimized by calculating such values for control variables MV1 to MV2 that the cost function used is minimized. Typically, in the cost function, the error of each output variable CV (difference from the target value at each moment of time over the optimization horizon) and each individual change in control variables MV are weighted. In addition, fining may be performed separately in a planned manner on the basis of the level of the control variable MV. Such fining may be directed to the breaking of limits (min and max) given to MV and control variable MV may also have an externally given optimized level or, for instance when chemicals are in question, a price originating from the consumption of the chemical.

Let us now study such control by means of the following example. The controller 212 may also comprise an optimizer 216, which may generate at least one optimized control variable **u** ($\Delta$**u**) by means of predictions **v** and **u** and targets **r**, **p** (**r** is the target trajectory of output variables and **p** is the target trajectory of control variables) for controlling the process 200. Control is executed in block 218. The operation of the controller 212 may be based on cost function J, which may be represented in a mathematical form for instance as follows:

$$J1 = \sum_{k=1}^{K1} \sum_{j=N1}^{N2} \left[ w_{kj} \left( v_{kj} - r_{kj} \right) \right]^2 ,$$

$$J2 = \sum_{k=1}^{K2} \sum_{j=1}^{M} \left[ b_{kj} \left( p_{kj} - u_{kj} \right) \right]^2 ,$$

$$J3 = \sum_{k=1}^{K2} \sum_{j=1}^{M} \left[ c_{kj} \left( \Delta u_{kj} \right) \right]^2 ,$$

$$J = J1 + J2 + J3,$$

wherein i, j and k are indexes, K1 is the number of output variables belonging to the optimization in numerical calculation, N1 is the time N1 measurement intervals to the future from the present, N2 is the time N2 measurement intervals to the future from the present, M is the time M control intervals to the future from the present, $r_{kj}$ is the object trajectory of the output variable, $p_{kj}$ is the desired control variable, $\Delta u_{kj}$ is a change in the control variable, and $w_{kj}$, $b_{kj}$ and $c_{kj}$ are weighting coefficients. The controller 212 tends to select a control variable and the output variable obtained thereby in a way minimizing the cost function J, i.e. an as small as possible value is south for the cost function J. In the first term J1, a weighted difference is generated between the target trajectory **r** and the predicted output variable **v**. In the second term J2, a weighted difference may be generated between the target control variable **p** and the realizable control variable **u**. By the use of the third term J3, it is possible to observe also change $\Delta$**u** in control variable **u** and give it a fine by using weight coefficient **c**. In addition, control variable u may be limited for instance such that control variable $u_i$ cannot be more than $u_{imax}$ and/or control variable $u_i$ cannot be less than $u_{imin}$, i.e. $u_{imin} \leq u_i \leq u_{imax}$ is valid for control variable $u_i$. Other variables may naturally be taken into consideration in the cost function.

The purpose of optimizing the controls of the pulping subprocess and the dispersing subprocess is to detach the fibres from each other as well as possible in order for them to be suitable for the manufacture of new paper, but the detachment work must not excessively break the fibres. At the same time, ink has to be detached from the fibres and the coating paste as well as possible, however, in such a manner that the ink particles detached are exactly of the right size for flotation, whereby ink particles detached from the fibres may be removed from the recycled fibre pulp.

Let us now re-examine the solution presented by means of Figure 1. Before the pulping subprocess 100, the characteristics of the raw material fed for pulping may be measured with measuring devices 120 at a measuring point 106. Such characteristics include production speed (i.e. the amount of material fed to the pulping subprocess), ash content and water content, for example. These measurements may be performed automatically or manually. Measurement data are fed to a controller 108, which performs multivariable-based predictive calculation and optimization of control actions. Similarly, the characteristics of the recycled fibre pulp may be measured with measuring devices 122 at a measuring point 110 after the pulping subprocess. These measurement data are also fed to the controller 108. Parameters better suitable for control are generated from the measurements 106 and 110 (measuring devices 120 and 122). In addition, the controller 108 is familiar with control history 116. The controller 108 calculates a plurality of control steps in the future, but usually only the first is executed. After a control interval, the optimization is recalculated in the same manner.

Measurements are also made after the washing subprocess 102. The characteristics of the recycled fibre pulp may be measured before the dispersing subprocess 104 with measuring devices 124 at a measuring point 112, and after the dispersing subprocess 104 with measuring devices 126 at a measuring point 114. These measurement data are fed to a controller 109. Parameters better suitable for control are generated from the measurements 112 and 114. In addition, the controller 109 is familiar with control history 118. The controller 109 calculates a plurality of control steps in the future, but usually only the first is executed. After a control interval, the optimization is recalculated in the same manner.

Information about the required production speed may also be fed to the controllers 108 and 109. The production speed is typically included in process models used in the control. The process has to be able to fulfil the production target and, at the same time, also the quality target. The adjuster of the production target may change the production speed if the desired quality is not achieved.

The characteristics of the fibres measured may include fibre length, fibre length distribution, drainability, number of fibre bundles and brightness, for example. Of these, brightness measurement may also measure the characteristic of the ink (ink is attached to fibres). Most of these measurements may be made continuously or at least with laboratory measuring instruments.

The most known methods of measuring drainability include CSF (Canadian Standard Freeness) and the Schopper-Riegler method, which are known *per se.* Drainability measures, among other things, fibre fibrillation, which refers to branched structural parts generated because of damage to or peeling of the uppermost layer of the fibres during pulp processing. In addition to fibrillation, drainability depends on a plurality of factors, such as fibres, pulp processing (e.g. mechanical/chemical), amount of fine substance, temperature, consistency.

Often in drainability measurements, the sample is filtered through a wire to a funnel having a constant flow valve and a side branch. The amount of water discharged from the side branch is measured, and this amount of water corresponds to drainability. Drainability may also be measured optically, in which case digital images are generated of the fibres. The images may be analyzed with a computer, and fibrillation determined. In addition, the number and quality of fibre bundles may be determined. The measurement may be made manually or automatically. Such a solution is disclosed in Finnish patent 113204.

Particle size, such as fibre length or diameter of ink particle, may be measured by using a line or matrix camera and a thin capillary pipe. The particles may be made to move individually in the thin pipe, from which the line camera generates an image on its detector surface. The image may be analyzed with a computer and the size of a particle may be determined by means of the number of pixels the image covers. When a representative number of particles has been measured (e.g. 1,000 to 1,000,000 or more), a particle size distribution may be generated. This solution is described in more detail in US patent 6,311,550.

The total ink in the pulp, i.e. the effective ink, may be measured for instance optically by using the ERIC method (Effective Residual Ink Concentration). Optical radiation on the desired band is directed to the pulp, and the intensity of reflected radiation is measured. Optical radiation may be infrared radiation, whose band may be selected such that the absorption coefficient of the ink in the pulp on the band used is higher than that of the fibres or other particles in the pulp. The band of infrared radiation may be between 700 nm and 1,500 nm, however, not being restricted thereto.

In addition, the amount or portion of ink adhered to the fibres and the amount or portion of free ink not adhered to the fibres may be measured from the recycled fibre pulp. The measurement may be performed optically by generating an image from which the number, portion and/or interrelationship of particles of different sizes and colours may be determined by means of a suitable image-processing program. Such a solution is described in US patent 6,010,593, which describes this measurement in more detail.

A fractionator enables the division of the particles in recycled fibre pulp into size classes. The operation of a fractionator is based on feeding a recycled fibre pulp sample to a long pipe, the sample being automatically divided during its progress in the pipe such that the largest particles are at the front of the sample and the smallest at the end of the sample. The different parts of the sample in the transparent pipe may be imaged, the image of each part comprising particles of different sizes. This enables the classification of particles into different size classes.

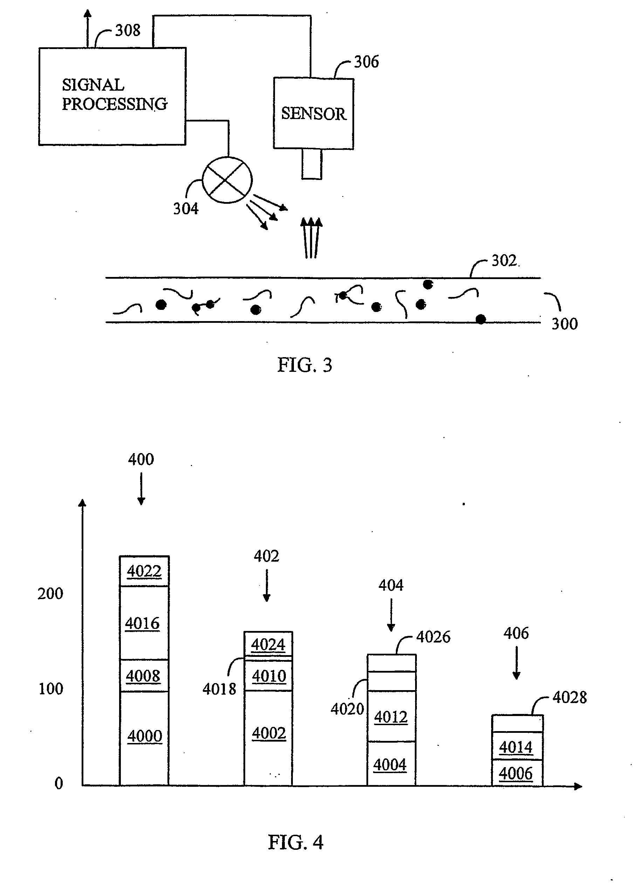

Figure 3 shows the general principle of optical measuring methods. Recycled fibre pulp 300 is directed to a transparent pipe 302 at the wavelength used in the optical measurement. As the recycled fibre pulp proceeds in the pipe 302, the recycled fibre pulp is illuminated with optical radiation generated by a source 304 of optical power. The optical power source 302 may be a led, a incandescent lamp, a gas discharge lamp, a laser or the like, and the optical power source may illuminate the target in a pulse-like manner or continuously. A camera 306, which may be a CCD camera (Charge Coupled Device) or a CMOS camera (Complementary Metal Oxide Semiconductor), for example, captures an image or images from the recycled fibre pulp 300 in the pipe 302. A signal processing unit 308 may control the imaging and the illumination of the target and perform image processing and analysis. In the measurement of the length of fibres and the size of ink particles, a capillary pipe having a diameter of from less than one millimetre to a couple of millimetres may be used as the pipe 302. In other measurements, the diameter of the pipe 302 may be larger, up to dozens of centimetres.

Instead of the camera 306, a spectrometer may be used as the sensor for determining the spectrum of the optical radiation reflected by each fraction. From the spectrum, the colour, brightness of the particles etc. and thus, the desired parameter to be measured, may be determined.

In contrast to what is shown in Figure 3, the source 304 may direct a suitable energy to each fraction for achieving an acoustic response signal in the particles of the sample. The source 304 may be for instance a laser whose optical radiation causes acoustic oscillation of the particles. Similarly, instead of the camera 306, a sensor may detect acoustic oscillation. Usually, acoustic oscillation is ultrasound. The frequency, amplitude and/or phase of acoustic radiation depend on the characteristics of the particles.

Division of the recycled fibre pulp into particle classes by means of the fractionator enables the measurement of the amount of free and attached ink in each particle class. At least some free ink particles are removable by flotation from the recycled fibre pulp. Most frequency, the diameter of such ink particles that can be removed by flotation is in the order of 10 $\mu$m to 100 $\mu$m.

Figure 4 shows particle distributions at different measuring points of the recycled fibre pulp. The vertical axis shows the amount of particles on a freely selected scale. Column 400 represents the measurement result after the pulping subprocess at measuring point 110 before flotation. Column 402 represents the measurement result before dispersing at measuring point 112 after flotation. Column 404 represents the measurement result after the dispersing process at measuring point 114. Column 406 represents the measurement result after flotation performed after the dispersing process. In each column 400 to 406, a lower part 4000 to 4006 indicates the number of ink particles attached to fibres. These cannot be removed by flotation, which is shown by the fact that although cleaning by flotation is performed between columns 400 and 402, the number of these particles has remained (at least almost) unchanged. A second lowest part 4008 to 4014 indicates the number of small free ink particles. Their diameter is usually less than 10 $\mu$m. These particles cannot either be removed to a great degree by flotation, unless the ink particles have been flocked into larger particles, which is shown in columns 400 and 402, for example. The second uppermost part 4016 to 4020 indicates the number of free ink particles that can be removed by flotation. Usually the diameter of these ink particles is in the order 10 $\mu$m to 100 $\mu$m. The uppermost parts 4022 to 4028 indicate the number of large ink particles. The diameter of these particles is usually more than 100 $\mu$m. Often such pieces also contain coating paste and have a poor foamability.

Accordingly, the measurements presented enable the generation of information to the controller of the pulping subprocess and the dispersing subprocess by means of at least two variables, at least one of which being related to fibres and at least one other being related to ink particles. The at least one variable relating to fibres typically includes information about the success of the fibre separation performed by the pulping or dispersing subprocess. This parameter is generated by the available measuring apparatus, the measurements including fibre length, brightness, fibrillation, filterability, etc., for example. The at least one variable relating to ink typically contains information about the success of the ink detachment performed by the pulping subprocess or the dispersing subprocess. This parameter is generated by the available measuring apparatus, and the measurements include the amount of ink attached to fibres, the amount of free ink, the size distribution of free ink particles (at least in respect to how well the ink particles were detachable from the recycled fibre pulp in connection with flotation) etc., for example.

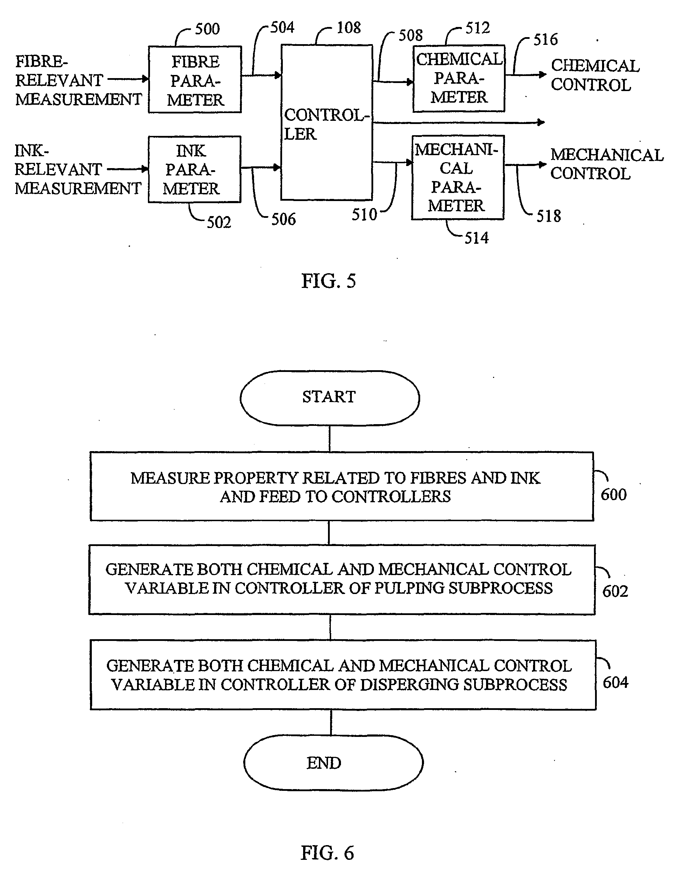

In accordance with Figure 5, controller 108 (and similarly controller 109) may generate a prediction of incoming process changes based on history data by means of these multivariable data and the predetermined model describing the process. Although cross-effects exist between the variables, for instance such that both mechanical processing and chemical processing detach fibres from each other and at the same time detach ink from fibres, their response models are different, and this difference may be utilized in controlling the subprocesses. The controller 108 calculates optimal control changes for the variables to be manipulated by means of the process models used by the controller. The controller 108, 109 may perform this by minimizing cost function J. The process model may be updateable and the model may be different on each adjustment round depending on process state and production speed. Control may be calculated separately for the pulping section and separately for the dispersing section, since the difference in time of these processes complicates a single-controller solution. In formation about the success of the pulping subprocess may be fed to the controller of the dispersing subprocess. Corresponding information may also be achieved by measuring the characteristics of the recycled fibre pulp entering dispersing. The controller 108, 109 of both pulping and dispersing includes at least one mechanical and one chemical control variable.

At least one characteristic of the fibres and at least one characteristic of the ink in the recycled fibre pulp may be measured at each measuring point 106, 110 to 114. The controller 108 of pulping may then generate at least two control variables based on the measurement result, one of which is for the mechanical processing of the recycled fibre pulp carried out in the pulping subprocess, and the other for the chemical processing of the recycled fibre pulp carried out in the pulping subprocess. The dispersing controller 109 may also generate at least two control variables based on the measurement results, one of which is for the mechanical processing of the recycled fibre pulp carried out in the dispersing subprocess, and the other for the chemical processing of the recycled fibre pulp carried out in the dispersing subprocess.

Figure 5 shows a solution for implementing the control. In this figure, reference is to controller 108 only, but the presentation applies also to controller 109. For control actions, measurement results may be combined in such a manner that at least two parameters 504, 506, one of which may indicate how well fibres are detached from each other, and another may indicate how well ink has been detached into free ink particles, may be generated in pre-processing parts 500, 502 of the controller 108. These parameters may be generated by means of a plurality of different measurements, as was stated above. The controller 108, in turn, may generate parameter 508 for chemical processing and parameter 510 for mechanical processing. Both parameters may be input in post-processing parts 512, 514 that belong to the controller 108 and wherein at least one output variable 516 for controlling chemical processing and at least one output variable 518 for controlling mechanical processing are generated.

The output variable for controlling chemical processing may control for instance the dosage of sodium hydroxide into the process, the altering of pH in the process, the dosage of hydrogen peroxide into the process, the dosage of sodium silicate into the process, the dosage of a suitable polymer into the process and/or the dosage of a surface active agent into the process. Since process temperature affects chemical processes, temperature is a feasible control variable along with other chemical variables. The variable used may be selected by means of process experiments. It is often possible to select a plurality of control variables to be controlled either separately or in one group.

The output variable controlling mechanical processing may control for instance consistency (dosage of water into the process), the rotation speed of pulper, pulping time and/or production speed. Both mechanical processing and chemical processing are directed to the pulping subprocess and/or the dispersing subprocess.

The electric power used for dispersing as regards the dispersing subprocess, and particularly the electric power going to the dispersing of the recycled fibre pulp (specific energy), is an important control variable. Temperature and pulp consistency are also important control variables. In the dispersing subprocess, it is important to observe particularly the detachment of ink from fibres and the degradation of ink into an invisible form.

The control may be specified if for instance the following four parameters, generated by means of measurement and, optionally laboratory analyses, are in use: portion of fibres and fibre bundles attached to each other, amount of generated fibrous fine material, fibre fibrillation, portion of ink attached to fibres of total ink (not removed in flotation), portion of ink degraded into an excessively fine form (not removed in flotation) or, correspondingly, the portion of ink suitable for flotation.

In accordance with the above, mechanical work with the aid of chemicals is required for detaching ink particles and fibres. The purpose of pulping is to perform the detachment work well, the purpose of dispersing being to complete the detachment further. Since a plurality of subprocesses, and probably also intermediate storages, by means of which the operation of the subprocesses is ensured for instance in the event of minor hardware failures, may typically exist between pulping and dispersing, is it possible to operate with two independent controllers that separately control pulping and dispersing. Since information about other characteristics of the recycled fibre pulp, such as quality of ink and pulp, age, detachment force required etc., is obtained both before pulping, during pulping and after pulping, this information may also be used for controlling dispersing. In the same way, information measured after the dispersing subprocess from fibres and ink may be utilized in controlling the pulping subprocess. This allows the operation of both the pulping subprocess and dispersing subprocess to be enhanced and optimal operating points to be found for both.

In the pulping subprocess, both mechanical and chemical detachment work may be controlled simultaneously. Mechanical detachment work may be divided into variables by means of a model, and, on the other hand, mechanical detachment work can be calculated in the same way on the basis of the measurements based on controls. Typical variables by means of such mechanical detachment work may be modelled include consistency and the speed of rotation of the pulper. Pulp consistency affects in a plurality of manners. On the one hand, water does not attenuate the dropping effect of the pulp, and, on the other hand, consistency affects the passage time of pulp through the pulping subprocess. The speed of rotation of a continuously working pulper affects the dropping height of recycled fibre pulp. In a batch pulper, pulping time is an essential control variable. Production speed affects in a plurality of ways.

Chemical detachment work refers to the swelling of fibres, to the detachment of fibres and ink with the aid of chemicals and to the prevention of reattachment of ink. Typical substances used for this purpose include sodium hydroxide and sodium silicate, for example. In this case, controllable variables of a model-based solution may be the amount of sodium hydroxide fed into the process for adjusting pH. Sodium silicate may also be used as a pH stabilizer. Sodium silicate is an often-used chemical in chemical detachment work, since it affects in many ways, for instance by preventing the reattachment of ink. In addition, selected surface-active polymers may be used for assisting the detachment of ink and ash and for preventing reattachment.

The purpose of the dispersing subprocess is to control the chemical and mechanical detachment work in the same manner. The dispersing subprocess may also be used for mixing bleaching chemicals into the pulp and for assisting bleaching.

The amount of mechanical work in the dispersing subprocess is generally depicted by the known specific energy consumption. The specific energy consumption depicts the electric power used by the dispersing subprocess per ton of pulp. Idle running power may be eliminated in the calculation formulas. Another control variable is pulp consistency. The consistency of the dispersing subprocess may be adjusted in a small scale only and is most frequently a quite inaccurately adjustable variable.

Chemical detachment work in a dispersing subprocess is usually slighter, but the use of suitable chemicals is possible, particularly for preventing the reattachment of detached ink.

In addition, measuring devices may be used to measure the separation of sticky substances in the recycled fibre pulp, and the controller may control the pulping subprocess and/or the dispersing subprocess to adjust the mechanical processing of the recycled fibre pulp on the basis of measurement results to detach sticky substances. This being so, mechanical processing may be enhanced. In addition or alternatively, chemicals may be used for detaching sticky substances.

In addition, the temperature of the recycled fibre pulp may be adjusted in both the pulping subprocess and the dispersing process.

When controllers have information about the quality and amount of raw material fed to the RCF process, the controllers are able to control the mechanical and chemical processing of the pulping subprocess and the dispersing subprocess. In this case, an estimate may be available concerning ink quality, paper quality and how rapidly the raw material should be processed. The controllers are able to use ink quality and paper quality to estimate the processing required by the raw material. In optimization, the controllers perceive, according to paper quality, in what kind of processing ink is detached from the fibres at the same as the fibres are detached from each other without too much damage to the fibres.

When the controllers have access to measurement data after the pulping subprocess, the measurement data may be used by means of feedback for controlling the pulping subprocess. In addition, measurement data after the pulping subprocess may be utilized in a feedforward manner for controlling the dispersing subprocess in order for any deficiencies in the pulping subprocess to be fixed at least until the operation of the pulping subprocess is enhanced/specified by control. At this stage, an estimate may be made for instance about how much ink may be removed from the recycled fibre pulp in washing. At the same time, the controllers may discover if the detachment of the fibres from each other and the detachment of ink from the fibres have succeeded in the predicted manner.

Similarly, when the controllers have access to the measurement data made after cleaning but before the dispersing subprocess, actual information may be obtained for instance about how much ink was actually removed in the washing. The controllers may also use the measurement data of this stage for enhancing/specifying the operation of both the pulping subprocess and the dispersing subprocess and for correcting the deficiencies of the pulping subprocess by adjusting the operation of the dispersion subprocess more accurately in the areas where deficiencies exist in the pulping subprocess.

When the measurement results are available after the dispersing subprocess, the controllers may again make an estimate of how much ink is possible to be removed in the next washing. In addition, the controllers may determine the state of the fibres and, on the basis thereof, either strengthen or weaken particularly the mechanical processing in both the pulping subprocess and the dispersing subprocess (chemical processing also affects the quality of fibres and therefore it can also be controlled such that the fibres endure mechanical processing better).

Figure 6 shows a flow diagram of the method presented. In step 600, at least one characteristic of the fibres in the recycled fibre and at least one characteristic of the ink is measured from the recycled fibre pulp in the recycled fibre line pulp, and the measurement results are fed to the controller of the pulping subprocess and to the controller of the dispersing subprocess, the controllers performing multivariable-based predictive calculation and optimization of control functions. New calculated variables, which describe the operation of the process better, may be calculated on the basis of the measurement results, and these calculated variables are employed in the optimization. In this step, it is determined how the process state and the individual output variables change if no control changes are made. At the same time, target trajectories are calculated and scaling changes required for optimization are made, and any level shifts for facilitating the optimization. Actual values of the control variables are also measured and used as the starting point of the optimization.

In step 602, at least one control variable is measured in the controller of the pulping subprocess on the basis of the measurement results for the mechanical processing of recycled fibre pulp to be performed in the pulping subprocess, and at least one control variable for the chemical processing of recycled fibre pulp to be performed in the pulping subprocess. Control changes are made on the basis of an optimization of the cost function. If no restrictions are met, optimization directly calculates an optimal solution, but if restrictions are met, the result is iterated. Future control changes are obtained as the result. This calculation is performed either separately for pulping and dispersing or by utilizing pulping calculation results in the optimization of dispersing.

In step 604, one control variable is generated in the controller of the dispersing subprocess on the basis of the measurement results for the mechanical processing of recycled fibre pulp to be performed in the dispersing subprocess, and at least one control variable for the chemical processing of recycled fibre pulp to be performed in the dispersing subprocess. Accordingly, in this step, the actual set values used by the unit adjusters of the process are generated from the control variables in the controllers of the pulping subprocess and the dispersing subprocess. The first of the control changes calculated are given to adjustment circuits for execution. Although a plurality of future changes was calculated, these are not executed, but a similar processing is restarted from step 600 when the adjustment interval has expired.

Although the invention is described above with reference to the example in accordance with the accompanying drawings, it will be appreciated that the invention is not to be so limited, but it may be modified in a variety of ways within the scope of the appended claims.

## Claims

1. A method of controlling a recycled fibre line comprising a pulping subprocess (100) and a dispersing subprocess (104), and wherein recycled fibre pulp is processed, **characterized by**
   measuring (600) at least one characteristic of ink and at least one of the following: number of fibre bundles, number of fibres attached to each other from the recycled fibre pulp of the recycled fibre line, and feeding measurement results to a controller (108) of the pulping subprocess (100) and to a controller (109) of the dispersing subprocess (104), which perform multivariable-based predictive calculation and optimization of control functions;
   generating (602), on the basis of the measurement results in the controller (108) of the pulping subprocess (100), at least one control variable (116, 516, 518) for mechanic processing of the recycled fibre pulp performed in the pulping subprocess (100) and at least one control variable (116, 516, 518) for chemical processing of the recycled fibre pulp performed in the pulping subprocess (100), and
   generating (604), on the basis of the measurement results in the controller (109) of the dispersing subprocess (104), at least one control variable (118, 516, 518) for mechanical processing of recycled fibre pulp performed in the dispersing subprocess (104) and at least one control variable (118, 516, 518) for chemical processing of recycled fibre pulp performed in the dispersing subprocess (104).

2. A method as claimed in claim 1, **characterized by**
   measuring (600) at least one characteristic of the fibres of the recycled fibre pulp and at least characteristic of the ink between the pulping subprocess (100) and the dispersing subprocess (104), and feeding measurement results to the controller (108) of the pulping subprocess (100); and
   measuring (602) at least one characteristic of the fibres of the recycled fibre pulp and at least one characteristic of the ink after the dispersing subprocess (104), and feeding measurement results to the controller (109) of the dispersing subprocess (104).

3. A method as claimed in claim 1, **characterized by** generating a characteristic of the recycled fibre pulp by means of a model from the measurement results by measuring at least one of the following: fibre length, amount of fibrous fine material, drainability, number of fibre bundles, number of fibres attached to each other.

4. A method as claimed in claim 1, **characterized by** generating a characteristic of the ink by means of a model by measuring at least one of the following: amount of ink attached to fibres, amount of free ink, brightness of the recycled fibre pulp, amount of ink removed in washing, amount of ink not removed in washing, size distribution of free ink particles.

5. A method as claimed in claim 1, **characterized by** determining a fibre parameter descriptive of the detachment of fibres from each other in the controller (108) of the pulping subprocess (100) or in the controller (109) of the dispersing subprocess (104) by means of at least one measurement and using the parameter in the generation of at least one control variable; and determining an ink parameter descriptive of the detachment of ink from fibres in the controller (108) of the pulping subprocess (100) or in the controller (109) of the dispersing subprocess (104) by means of at least one measurement and using the parameter in the generation of at least one control variable.

6. A method as claimed in claim 1, **characterized by** determining at least one chemical parameter in the controller (108) of the pulping subprocess (100) or in the controller (109) of the dispersing subprocess (104) for controlling the dosage of chemicals into the recycled fibre process; and determining at least of one mechanical parameter in the controller (108) of the pulping subprocess or in the controller (109) of the dispersing subprocess (104) for controlling the mechanical processing in the recycled fibre process.

7. A method as claimed in claim 1, **characterized by** measuring at least one of the following:

   production speed, ash content, water content, from the recycled fibre pulp before the pulping subprocess (100) for controlling the pulping subprocess and/or the dispersing subprocess; or

   **characterized by** measuring the detachment of ink from a filling agent and a coating paste in the recycled fibre pulp, and, on the basis of the measurement results, controlling the pulping subprocess (100) with the controller (108) of the pulping subprocess, and the dispersing subprocess (104) with the controller (109) of the dispersing subprocess to adjust the mechanical processing of the recycled fibre pulp to detach ink; or **characterized by** measuring the separation of sticky substances from the recycled fibre pulp and controlling the pulping subprocess (100) with the controller (108) of the pulping subprocess and the dispersing subprocess (104) with the controller (109) of the dispersing process to adjust the mechanical processing of the recycled fibre pulp to detach sticky substances.

8. A method as claimed in claim 1, **characterized by** feeding forward the controller (108) of the pulping subprocess (100) to the controller (109) of the dispersing subprocess (104) for taking into account the control of the pulping subprocess (100) in the control of the dispersing process (104).

9. A recycled fibre line comprising a pulping subprocess and a dispersing subprocess, and wherein recycled fibre pulp is processed, **charac** - **terized** in that the recycled fibre line comprises a controller (108) of the pulping subprocess (100) and a controller (109) of the dispersing subprocess (104), the controllers being adapted to perform multivariable-based predictive calculation and optimization of control functions; measuring devices (120, 122, 124, 126) for measuring at least one characteristic of ink and at least one of the following: number of fibre bundles, number of fibres attached to each other in at least one measuring point (106, 110, 112, 114), and the measuring devices (120, 122, 124, 126) are adapted to feed measurement results to the controller (108) of the pulping subprocess (100) and to the controller (109) of the dispersing subprocess, the controller (108) of the pulping subprocess (100) is adapted to generate, on the basis of the measurement results, at least one control variable (116, 516) for chemical processing of the recycled fibre pulp performed in the pulping subprocess (100) and at least one control variable (116, 518) for mechanical processing performed in the pulping subprocess (100), and the controller (109) of the dispersing subprocess (104) is adapted to generate, on the basis of the measurement results, at least one control variable (118, 516) for chemical processing of the recycled fibre pulp performed in the dispersing subprocess (104) and at least one control variable (118, 518) for mechanical processing of the recycled fibre pulp performed in the dispersing subprocess (104).

10. A recycled fibre line as claimed in claim 9, **charac-**

**terized in that** the measuring devices (122, 124) are arranged to measure at least one characteristic of the fibres of the recycled fibre pulp and at least characteristic of the ink between the pulping subprocess (100) and the dispersing subprocess (104), and the measuring devices (122, 124) are arranged to feed the measurement results to the controller (108) of the pulping subprocess (100) and to the controller (109) of the dispersing process (104); and the measuring devices (126) are arranged to measure at least one characteristic of the fibres of the recycled fibre pulp and at least one characteristic of the ink after the dispersing subprocess (104), and the measuring devices (126) are arranged to feed the measurement results to the controller (108) of the pulping subprocess (100) and to the controller (109) of the dispersing subprocess (104).

11. A recycled fibre line as claimed in claim 9,
    **characterized in that** the measuring devices (122 to 126) are arranged to measure at least one of the following characteristics determining fibre quality: fibre length, amount of fibrous fine material, drainability, number of fibre bundles, number of fibres attached to each other and the controller (108) of the pulping subprocess (100) and the controller (109) of the dispersing subprocess (104) are arranged to generate at least one control variable affecting the processing of the fibres on the basis of the measurement and a model; or
    **characterized in that** the measuring devices (122 to 126) are arranged to measure at least one of the following ink-determining characteristics: amount of ink attached to fibres, amount of free ink, brightness of the recycled fibre pulp, amount of ink removed in washing, amount of ink not removed in washing, size distribution of free ink particles, and the controller (108) of the pulping subprocess (100) and the controller (109) of the dispersing subprocess (104) are arranged to generate at least one control variable affecting the processing of the ink on the basis of the measurement and a model.

12. A recycled fibre line as claimed in claim 9, **characterized in that** the controller (108) of the pulping subprocess (100) or the controller (109) of the dispersing subprocess (104) is arranged to determine, on the basis of at least one measurement, a fibre parameter descriptive of the detachment of fibres from each other, and to use the parameter in the generation of at least one control variable; and the controller (108) of the pulping subprocess (100) or the controller (109) of the dispersing subprocess (104) is arranged to determine, on the basis of at least one measurement, an ink parameter descriptive of the detachment of ink particles from each other, and to use the parameter in the generation of at least one control variable.

13. A recycled fibre line as claimed in claim 9, **characterized in that** the controller (108) of the pulping subprocess (100) or the controller (109) of the dispersing subprocess (104) is arranged to generate at least one chemical parameter for controlling for controlling the dosage of chemicals into the recycled fibre process; and the controller (108) of the pulping subprocess (100) or the controller (109) of the dispersing subprocess (104) is arranged to generate at least one mechanical parameter for controlling the mechanical processing of the recycled fibre process.

14. A recycled fibre line as claimed in claim 9, **characterized in that** the recycled fibre line comprises measuring devices (120) for measuring, from the recycled fibre pulp, before the pulping subprocess, at least one of the following: production speed, ash content, water content, and the controller is arranged, on the basis of the measurement results, to control the pulping subprocess and/or the dispersing subprocess.

15. A recycled fibre line as claimed in claim 9, **characterized in that** the measuring devices (122 to 126) between the pulping subprocess (100) and the dispersing subprocess (104) and after the dispersing process (104) are arranged either to measure the detachment of ink from a filling agent and a coating paste or to measure the separation of sticky substances in the recycled fibre pulp, and the controller (108) of the pulping subprocess (100) and the controller (109) of the dispersing subprocess (104) are arranged to adjust, on the basis of the measurement results, the mechanical processing of the recycled fibre pulp to detach ink or sticky substances in the pulping subprocess (100) and in the dispersing subprocess (104).

16. A recycled fibre line as claimed in claim 9, **characterized in that** the controller (108) of the pulping subprocess (100) is fed forward to the controller (109) of the dispersing subprocess (104) for taking into account the control of the pulping subprocess (100) in the control of the dispersing process (104).

**Patentansprüche**

1. Verfahren zum Steuern einer Recyclingfaserlinie, die einen Aufschlussteilprozess (100) und einen Dispergierungsteilprozess (104) aufweist, und wobei eine Recyclingfaserpulpe verarbeitet wird, **gekennzeichnet durch**
   Messen (600) zumindest einer Charakteristik einer Farbe und zumindest einer von den folgenden Größen: Anzahl von Faserbündeln, Anzahl von Fasern, die in der Recyclingfaserpulpe der Recyclingfaserlinie aneinander anhaften, und Zuführen der Messergebnisse zu einem Steuergerät (108) des Aufschlussteilprozesses (100) und zu einem Steuergerät (109) des Dispergierungsteilprozesses (104), die eine auf mehreren Größen basierende Vorhersageberechnung und eine Optimierung von Steuerungsfunktionen ausführen;

Bilden (602) auf der Grundlage der Messergebnisse in dem Steuergerät (108) des Aufschlussteilprozesses (100) von zumindest einer Steuerungsgröße (116, 516, 518) zum mechanischen Verarbeiten der Recyclingfaserpulpe, das in dem Aufschlussteilprozess (100) ausgeführt wird, und von zumindest einer Steuerungsgröße (116, 516, 518) zum chemischen Verarbeiten der Recyclingfaserpulpe, das in dem Aufschlussteilprozess (100) ausgeführt wird, und Bilden (604) auf der Grundlage der Messergebnisse in dem Steuergerät (109) des Dispergierungsteilprozesses (104) von zumindest einer Steuerungsgröße (118, 516, 518) zum mechanischen Verarbeiten einer Recyclingfaserpulpe, das in dem Dispergierungsteilprozess (104) ausgeführt wird, und von zumindest einer Steuerungsgröße (118, 516, 518) zum chemischen Verarbeiten einer Recyclingfaserpulpe, das in dem Dispergierungsteilprozess (104) ausgeführt wird.

2. Verfahren nach Anspruch 1, **gekennzeichnet durch** Messen (600) zumindest einer Charakteristik der Fasern der Recyclingfaserpulpe und zumindest einer Charakteristik der Farbe zwischen dem Aufschlussteilprozess (100) und dem Dispergierungsteilprozess (104) und Zuführen der Messergebnisse zu dem Steuerungsgerät (108) des Aufschlussteilprozesses (100); und

Messen (602) von zumindest einer Charakteristik der Fasern der Recyclingfaserpulpe und zumindest einer Charakteristik der Farbe nach dem Dispergierungsteilprozess (104) und Zuführen der Messergebnisse zu dem Steuergerät (109) des Dispergierungsteilprozesses (104).

3. Verfahren nach Anspruch 1, **gekennzeichnet durch** Bilden einer Charakteristik der Recyclingfaserpulpe mittels eines Models aus den Messergebnissen **durch** Messen von zumindest einer der folgenden Größen: Faserlänge, Anteil von fasrigem Feinmaterial, Entwässerungsfähigkeit, Anzahl von Faserbündeln, Anzahl von Fasern, die aneinander anhaften.

4. Verfahren nach Anspruch 1, **gekennzeichnet durch** Bilden einer Charakteristik der Farbe mittels eines Models **durch** Messen von zumindest einer der folgenden Größen: Menge an Farbe, die an den Fasern anhaftet, Menge an freier Farbe, Helligkeit der Recyclingfaserpulpe, Menge an Farbe, die beim Waschen entfernt wird, Menge an Farbe, die beim Waschen nicht entfernt wird, Größenverteilung von freien Farbpartikeln.

5. Verfahren nach Anspruch 1, **gekennzeichnet durch** Bestimmen eines Faserparameters, der die Trennung der Fasern voneinander beschreibt, in dem Steuergerät (108) des Aufschlussteilprozesses (100) oder in dem Steuergerät (109) des Dispergierungsteilprozesses (104) mittels zumindest einer Messung und mittels des Parameters bei der Bildung der zumindest einen Steuerungsgröße; und Bestimmen eines Farbparameters, der die Trennung der Farbe von den Fasern beschreibt, in dem Steuergerät (108) des Aufschlussteilprozesses (100) oder in dem Steuergerät (109) des Dispergierungsteilprozesses (104) mittels zumindest einer Messung und mittels des Parameters bei der Bildung der zumindest einen Steuerungsgröße.

6. Verfahren nach Anspruch 1, **gekennzeichnet durch** Bestimmen zumindest eines chemischen Parameters in dem Steuergerät (108) des Aufschlussteilprozesses (100) oder in dem Steuergerät (109) des Dispergierungsteilprozesses (104) zum Steuern der Dosierung von Chemikalien in dem Recyclingfaserprozess; und Bestimmen von zumindest einem mechanischen Parameter in dem Steuergerät (108) des Aufschlussteilprozesses oder in dem Steuergerät (109) des Dispergierungsteilprozesses (104) zum Steuern der mechanischen Verarbeitung in dem Recyclingfaserprozess.

7. Verfahren nach Anspruch 1,
   **gekennzeichnet durch** Messen von zumindest einer der folgenden Größen: Produktionsgeschwindigkeit, Aschegehalt, Wassergehalt von der Recyclingfaserpulpe vor dem Aufschlussteilprozess (100) zum Steuern des Aufschlussteilprozesses und/oder des Dispergierungsteilprozesses; oder
   **gekennzeichnet durch** Messen der Trennung der Farbe aus einem Füllmittel und einer Streichpaste in der Recyclingfaserpulpe und, auf der Grundlage der Messergebnisse, Steuern des Aufschlussteilprozesses (100) mit dem Steuergerät (108) des Aufschlussteilprozesses und des Dispergierungsteilprozesses (104) mit dem Steuergerät (109) des Dispergierungsteilprozesses, um die mechanische Verarbeitung der Recyclingfaserpulpe einzustellen, um die Farbe zu trennen; oder
   **gekennzeichnet durch** Messen der Trennung von klebrigen Substanzen in der Recyclingfaserpulpe und Steuern des Aufschlussteilprozesses (100) mit dem Steuergerät (108) des Aufschlussteilprozesses und des Dispergierungsteilprozesses (104) mit dem Steuergerät (109) des Dispergierungsteilprozesses, um die mechanische Verarbeitung der Recyclingfaserpulpe einzustellen, um die klebrigen Substanzen zu trennen.

8. Verfahren nach Anspruch 1, **gekennzeichnet durch** Vorwärtskoppeln des Steuerungsgeräts (108) des Aufschlussteilprozesses (100) mit dem Steuergerät (109) des Dispergierungsteilprozesses (104), um die Steuerung des Aufschlussteilprozesses (100) bei der Steuerung des Dispergierungsteilprozesses (104) zu berücksichtigen.

9. Recyclingfaserlinie, die einen Aufschlussteilprozess und einen Dispergierungsteilprozess umfasst, und wobei eine Recyclingfaserpulpe verarbeitet wird, **dadurch gekennzeichnet, dass** die Recyclingfaserlinie Folgendes aufweist:

ein Steuergerät (108) des Aufschlussteilprozesses (100) und ein Steuergerät (109) des Dispergierungsteilprozesses (104), wobei die Steuergeräte angepasst sind, um eine auf mehreren Größen basierende Vorhersageberechnung und eine Optimierung von Steuerungsfunktionen auszuführen;
Messvorrichtungen (120, 122, 124, 126) zum Messen von zumindest einer Charakteristik einer Farbe und zumindest einer von in den folgenden Größen: Anzahl von Faserstoffbündeln, Anzahl von Fasern, die in zumindest einem Messpunkt (106, 110, 112, 114) aneinander anhaften, und wobei die Messvorrichtungen (120, 122, 124, 126) angepasst sind, um Messergebnisse zu dem Steuerungsgerät (108) des Aufschlussteilprozesses (100) und zu dem Steuergerät (109) des Dispergierungsteilprozesses zuzuführen,
das Steuerungsgerät (108) des Aufschlussteilprozesses (100) angepasst ist, um auf der Grundlage der Messergebnisse zumindest eine Steuerungsgröße (116, 516) zum chemischen Verarbeiten der Recyclingfaserpulpe, das in dem Aufschlussteilprozess (100) ausgeführt wird, und zumindest eine Steuerungsgröße (116, 518) zum mechanischen Verarbeiten, das in dem Aufschlussteilprozess (100) ausgeführt wird, zu bilden, und
das Steuerungsgerät (109) des Dispergierungsteilprozesses (104) angepasst ist, um auf der Grundlage der Messergebnisse zumindest eine Steuerungsgröße (118, 516) zum chemischen Verarbeiten der Recyclingfaserpulpe, das in dem Dispergierungsteilprozess (104) ausgeführt wird, und zumindest eine Steuerungsgröße (118, 518) zum mechanischen Verarbeiten der Recyclingfaserpulpe, das in dem Dispergierungsteilprozess (104) ausgeführt wird, zu bilden.

10. Recyclingfaserlinie nach Anspruch 9, **dadurch gekennzeichnet, dass** die Messvorrichtungen (122, 124) angeordnet sind, um zumindest eine Charakteristik der Fasern der Recyclingfaserpulpe und zumindest eine Charakteristik der Farbe zwischen dem Aufschlussteilprozess (100) und dem Dispergierungsteilprozess (104) zu messen, und die Messvorrichtungen (122, 124) angeordnet sind, um die Messergebnisse zu dem Steuerungsgerät (108) des Aufschlussteilprozesses (100) und zu dem Steuerungsgerät (109) des Dispergierungsteilprozesses (104) zuzuführen; und
die Messvorrichtungen (126) angeordnet sind, um zumindest eine Charakteristik der Fasern der Recyclingfaserpulpe und zumindest eine Charakteristik der Farbe nach dem Dispergierungsteilprozess (104) zu messen, und die Messvorrichtungen (126) angeordnet sind, um die Messergebnisse zu dem Steuerungsgerät (108) des Aufschlussteilprozesses (100) und zu dem Steuerungsgerät (109) des Dispergierungsteilprozesses (104) zuzuführen.

11. Recyclingfaserlinie nach Anspruch 9,
**dadurch gekennzeichnet, dass** die Messvorrichtungen (122 bis 126) angeordnet sind, um zumindest eine der folgenden Charakteristika, die die Faserqualität bestimmen, zu messen: Faserlänge, Anteil von fasrigem Feinmaterial, Entwässerungsfähigkeit, Anzahl von Faserbündel, Anzahl von Fasern, die aneinander anhaften, und das Steuerungsgerät (108) des Aufschlussteilprozesses (100) und das Steuerungsgerät (109) des Dispergierungsteilprozesses (104) angeordnet sind, um zumindest eine Steuerungsgröße, die die Verarbeitung der Fasern beeinflusst, auf der Grundlage der Messung und eines Models zu bilden; oder
**dadurch gekennzeichnet, dass** die Messvorrichtungen (122 bis 126) angeordnet sind, um zumindest eine der folgenden farbbestimmenden Charakteristika zu messen: Menge an Farbe, die an den Fasern anhaftet, Menge an freier Farbe, Helligkeit der Recyclingfaserpulpe, Menge an Farbe, die beim Waschen entfernt wird, Menge an Farbe die beim Waschen nicht entfernt wird, Größenverteilung von freien Farbpartikeln, und das Steuerungsgerät (108) des Aufschlussteilprozesses (100) und das Steuerungsgerät (109) des Dispergierungsteilprozesses (104) angeordnet sind, um zumindest eine Steuerungsgröße, die die Verarbeitung der Farbe beeinflusst, auf der Grundlage der Messung und eines Models zu bilden.

12. Recyclingfaserlinie nach Anspruch 9, **dadurch gekennzeichnet, dass** das Steuerungsgerät (108) des Aufschlussteilprozesses (100) oder das Steuerungsgerät (109) des Dispergierungsteilprozesses (104) angeordnet ist, um auf der Grundlage zumindest einer Messung einen Faserparameter zu bestimmen, der die Trennung der Fasern voneinander beschreibt, und um den Parameter bei der Bildung der zumindest einen Steuerungsgröße zu verwenden; und das Steuerungsgerät (108) des Aufschlussteilprozesses (100) oder das Steuerungsgerät (109) des Dispergierungsteilprozesses (104) angeordnet ist, um auf der Grundlage zumindest einer Messung einen Farbparameter, der die Trennung der Farbpartikel voneinander beschreibt, zu bestimmen, und um den Parameter bei der Bildung der zumindest einen Steuerungsgröße zu verwenden.

13. Recyclingfaserlinie nach Anspruch 9, **dadurch gekennzeichnet, dass** das Steuerungsgerät (108) des Aufschlussteilprozesses (100) oder das Steuerungsgerät (109) des Dispergierungsteilprozesses (104) angeordnet ist, um zumindest einen chemischen Parameter zum Steuern der Dosierung von Chemikalien in dem Recyclingfaserprozess zu bilden; und das Steuerungsgerät (108) des Aufschlussteilprozesses (100) oder das Steuerungsgeräts (109) des Dispergierungsteilprozesses (104) angeordnet ist, um zumindest einen mechanischen Parameter zum Steuern der mechanischen Verarbeitung des Recyclingfaserprozesses zu bilden.

14. Recyclingfaserlinie nach Anspruch 9, **dadurch gekennzeichnet, dass** die Recyclingfaserlinie Messvorrichtungen (120) zum Messen aus der Recyclingfaserpulpe vor dem Aufschlussteilprozess zumindest einer der folgenden Größen aufweist: Produktionsgeschwindigkeit, Aschegehalt, Wassergehalt, und das Steuergerät angeordnet ist, um auf der Grundlage der Messergebnisse den Aufschlussteilprozess und/oder den Dispergierungsteilprozess zu steuern.

15. Recyclingfaserlinie nach Anspruch 9, **dadurch gekennzeichnet, dass** die Messvorrichtungen (122 bis 126) zwischen dem Aufschlussteilprozess (100) und dem Dispergierungsteilprozess (104) und nach dem Dispergierungsteilprozess (104) angeordnet sind, entweder um die Trennung der Farbe aus einem Füllmittel und einer Streichpaste zu messen oder um die Trennung von klebrigen Substanzen in der Recyclingfaserpulpe zu messen, und das Steuerungsgerät (108) des Aufschlussteilprozesses (100) und das Steuerungsgerät (109) des Dispergierungsteilprozesses (104) angeordnet sind, um auf der Grundlage der Messergebnisse die mechanische Verarbeitung der Recyclingfaserpulpe einzustellen, um die Farbe oder die klebrigen Substanzen in dem Aufschlussteilprozess (100) und in dem Dispergierungsteilprozess (104) zu trennen.

16. Recyclingfaserlinie nach Anspruch 9, **dadurch gekennzeichnet, dass** das Steuerungsgerät (108) des Aufschlussteilprozesses (100) mit dem Steuerungsgerät (109) des Dispergierungsteilprozesses (104) vorwärtsgekoppelt wird, um die Steuerung des Aufschlussteilprozesses (100) bei der Steuerung des Dispergierungsteilprozesses (104) zu berücksichtigen.

## Revendications

1. Un procédé de commande d'une ligne de recyclage de fibres comprenant un sous-processus de mise en pâte (100) et un sous-processus de dispersion (104), et dans lequel de la pâte de fibres recyclées est traitée, **caractérisée par** le fait de
mesurer (600) au moins une caractéristique de l'encre et au moins un des éléments suivants : le nombre de faisceaux de fibres, le nombre de fibres fixées les unes aux autres dans la pâte de fibres recyclées de la ligne de recyclage de fibres, et transmettre les résultats de mesure dans une unité de commande (108) du sous-processus de mise en pâte (100) et dans une unité de commande (109) du sous-processus de dispersion (104), qui effectuent un calcul prédictif sur la base de variables multiples et une optimisation des fonctions de commande ;
générer (602), sur la base des résultats de mesure présents dans l'unité de commande (108) du sous-processus de mise en pâte (100), au moins une variable de commande (116, 516, 518) pour le traitement mécanique de la pâte de fibres recyclées effectué dans le sous-processus de mise en pâte (100) et au moins une variable de commande (116, 516, 518) pour le traitement chimique de la pâte de fibres recyclées effectué dans le sous-processus de mise en pâte (100), et
générer (604), sur la base des résultats de mesure dans l'unité de commande (109) du sous-processus de dispersion (104), au moins une variable de commande (118, 516, 518) pour le traitement mécanique de la pâte de fibres recyclées effectué dans le sous-processus de dispersion (104) et au moins une variable de commande (118, 516, 518) pour le traitement chimique de la pâte de fibres recyclées effectué dans le sous-processus de dispersion (104).

2. Un procédé tel que revendiqué dans la revendication 1, **caractérisé par** le fait de mesurer (600) au moins une caractéristique des fibres de la pâte de fibres recyclées et au moins une caractéristique de l'encre entre le sous-processus de mise en pâte (100) et le sous-processus de dispersion (104), et transmettre des résultats de mesure à l'unité de commande (108) du sous-processus de mise en pâte (100), et de mesurer (602) au moins une caractéristique des fibres de la pâte de fibres recyclées et au moins une caractéristique de l'encre après le sous-processus de dispersion (104), et fournir des résultats de mesure à l'unité de commande (109) du sous-processus de dispersion (104).

3. Un procédé tel que revendiqué dans la revendication 1, **caractérisé par** le fait de générer une caractéristique de la pâte de fibres recyclées au moyen d'un modèle à partir des résultats de mesure en mesurant au moins un des éléments suivants: la longueur de fibre, la quantité de matière fine fibreuse, l'égouttabilité, le nombre de faisceaux de fibres, le nombre de fibres fixées les unes aux autres.

4. Un procédé tel que revendiqué dans la revendication 1, **caractérisé par** le fait de générer une caractéristique de l'encre au moyen d'un modèle en mesurant au moins un des éléments suivants : la quantité d'encre fixée aux fibres, la quantité d'encre libre, la luminosité de la pâte de fibres recyclées, la quantité d'encre éliminée au lavage, la quantité d'encre qui n'est pas éliminée au lavage, la distribution granulométrique des particules d'encre libres.

5. Un procédé tel que revendiqué dans la revendication 1, **caractérisé par** le fait de déterminer un paramètre des fibres descriptif du détachement des fibres les unes par rapport aux autres dans l'unité de commande (108) du sous-processus de mise en pâte (100) ou dans l'unité de commande (109) dans le sous-processus de dispersion (104) au moyen d'au moins une mesure, et d'utiliser le paramètre pour générer au moins une variable de commande ; et par le fait de déterminer un paramètre d'encre descriptif du détachement de l'encre depuis les fibres dans l'unité de commande (108) du sous-processus de mise en pâte (100) ou dans l'unité de commande (109) du sous-processus de dispersion (104) au moyen d'au moins une mesure et d'utiliser le paramètre pour générer au moins une variable de commande.

6. Un procédé tel que revendiqué dans la revendication 1, **caractérisé par** le fait de déterminer au moins un paramètre chimique dans l'unité de commande (108) du sous-processus de mise en pâte (100) ou dans l'unité de commande (109) du sous-processus de dispersion (104) pour commander le dosage des produits chimiques au cours du procédé de recyclage de fibres, et par le fait de déterminer au moins un paramètre mécanique dans l'unité de commande (108) du sous-processus de mise en pâte ou dans l'unité de commande (109) du sous-processus de dispersion (104) pour commander le traitement mécanique dans le procédé de recyclage de fibres.

7. Un procédé tel que revendiqué dans la revendication 1,
**caractérisé par** le fait de mesurer au moins un des éléments suivants : la vitesse de production, la teneur en cendres, la teneur en eau, dans la pâte de fibres recyclée avant le sous-processus de mise en pâte (100) pour commander le sous-processus de mise en pâte et / ou le sous-processus de dispersion ; ou

**caractérisé par** le fait de mesurer le détachement de l'encre à partir d'un agent de remplissage et d'une pâte d'enduction dans la pâte de fibres recyclées, et, sur la base des résultats de mesure, de commander le sous-processus de mise en pâte (100) avec l'unité de commande (108) du sous-processus de mise en pâte, et le sous-processus de dispersion (104) avec l'unité de commande (109) du sous-processus de dispersion pour régler le traitement mécanique de la pâte de fibres recyclées afin de détacher l'encre ; ou

**caractérisé par** le fait de mesurer la séparation de substances collantes depuis la pâte de fibres recyclées et de commander le sous-processus de mise en pâte (100) avec l'unité de commande (108) du sous-processus de mise en pâte et le sous-processus de dispersion (104) avec l'unité de commande (109) du sous processus de dispersion pour régler le traitement mécanique de la pâte de fibres recyclées afin de détacher des substances collantes.

8. Un procédé tel que revendiqué dans la revendication 1, **caractérisé par** le fait d'alimenter en avant du dispositif de commande (108) du sous-processus de mise en pâte (100) dans l'unité de commande (109) du sous-processus de dispersion (104) pour prendre en compte la commande du sous-processus de mise en pâte (100) dans la commande du sous-processus de dispersion (104).

9. Une ligne de recyclage de fibres comprenant un sous-processus de mise en pâte et un sous-processus de dispersion, et dans laquelle de la pâte de fibres recyclées est traitée, **caractérisé en ce que** la ligne de recyclage de fibres comprend
une unité de commande (108) du sous-processus de mise en pâte (100) et une unité de commande (109) du sous-processus de dispersion (104), les unités de commandes étant adaptées pour effectuer un calcul de prédiction basé sur des variables multiples et d'optimisation des fonctions de commande ; des dispositifs de mesure (120, 122, 124, 126) pour mesurer au moins une caractéristique de l'encre et au moins un des éléments suivants : le nombre de faisceaux de fibres, le nombre de fibres fixées les unes aux autres dans au moins un point de mesure (106, 110, 112, 114), et les dispositifs de mesure (120, 122, 124, 126) sont adaptés pour transmettre les résultats de mesure à l'unité de commande (108) du sous-processus de mise en pâte (100) et à l'unité de commande (109) du sous-processus de dispersion, l'unité de commande (108) du sous-processus de mise en pâte (100) est adaptée pour générer, sur la base des résultats de mesure, au moins une variable de commande (116, 516) pour le traitement chimique de la pâte de fibres recyclées effectué dans le sous-processus de mise en pâte (100) et au moins une variable de commande (116, 518) pour le traitement mécanique effectué dans le sous-processus de mise en pâte (100), et

l'unité de commande (109) du sous-processus de dispersion (104) est adaptée pour générer, sur la base des résultats de mesure, au moins une variable de commande (118, 516) pour le traitement chimique de la pâte de fibres recyclées dans le sous-processus de dispersion (104) et au moins une variable de commande (118, 518) pour le traitement mécanique de la pâte de fibres recyclées dans le sous-processus de dispersion (104).

10. Une ligne de recyclage de fibres telle que revendiquée dans la revendication 9, **caractérisée en ce que** les dispositifs de mesure (122, 124) sont agencés pour mesurer au moins une caractéristique des fibres de la pâte de fibres recyclées et au moins une caractéristique de l'encre entre le sous-processus de mise en pâte (100) et le sous-processus de dispersion (104), et les dispositifs de mesure (122, 124) sont agencés pour transmettre les résultats de mesure à l'unité de commande (108) du sous-processus de mise en pâte (100) et à de l'unité de commande (109) du sous-processus de dispersion (104), et

les dispositifs de mesure (126) sont agencés pour mesurer au moins une caractéristique des fibres de la pâte de fibres recyclées et au moins une caractéristique de l'encre après le sous-processus de dispersion (104), et les dispositifs de mesure (126) sont agencés pour transmettre les résultats de mesure à l'unité de commande (108) du sous-processus de mise en pâte (100) et à l'unité de commande (109) du sous-processus de dispersion (104).

11. Une ligne de recyclage de fibres telle que revendiquée dans la revendication 9,
**caractérisée en ce que** les dispositifs de mesure (122 à 126) sont agencés pour mesurer au moins une des caractéristiques suivantes déterminant les qualités des fibres : la longueur des fibres, la quantité de matière fine fibreuse, l'égouttabilité, le nombre de faisceaux de fibres, le nombre de fibres fixées les unes aux autres, et l'unité de commande (108) du sous-processus de mise en pâte (100) et l'unité de commande (109) du sous-processus de dispersion (104) sont agencées pour générer au moins une variable de commande affectant le traitement des fibres sur la base de la mesure et un modèle ; ou **caractérisée en ce que** les dispositifs de mesure (122 à 126) sont agencés pour mesurer au moins une des caractéristiques suivantes de détermination d'encre : la quantité d'encre fixée aux fibres, la quantité d'encre libre, la luminosité de la pâte de fibres recyclées, la quantité d'encre éliminée au lavage, la quantité d'encre non éliminée au lavage, la distribution granulométrique des particules d'encre libres, et l'unité de commande (108) du sous-processus de mise en pâte (100) et l'unité de commande (109) du sous-processus de dispersion (104) sont agencées pour générer au moins une variable de commande affectant le traitement de l'encre sur la base de la mesure et un modèle.

12. Une ligne de recyclage de fibres telle que revendiquée dans la revendication 9, **caractérisée en ce que** l'unité de commande (108) du sous-processus de mise en pâte (100) ou l'unité de commande (109) du sous-processus de dispersion (104) est agencée pour déterminer, sur la base d'au moins une mesure, un paramètre de fibres descriptif du détachement des fibres les unes des autres, et **en ce que** l'on utilise le paramètre pour générer au moins une variable de commande ; et l'unité de commande (108) du sous-processus de mise en pâte (100) ou l'unité de commande (109) du sous-processus de dispersion (104) est agencée pour déterminer, sur la base d'au moins une mesure, un paramètre d'encre descriptif du détachement des particules d'encre les unes des autres, et **en ce que** l'on utilise le paramètre dans la génération d'au moins une variable de commande.

13. Une ligne de recyclage de fibres telle que revendiquée dans la revendication 9, **caractérisée en ce que** l'unité de commande (108) du sous-processus de mise en pâte (100) ou l'unité de commande (109) du sous-processus de dispersion (104) est agencée pour générer au moins un paramètre chimique pour commander le dosage de produits chimiques dans le procédé de recyclage de fibres ; et l'unité de commande (108) du sous-processus de mise en pâte (100) ou l'unité de commande (109) du sous-processus de dispersion (104) est agencée pour générer au moins un paramètre mécanique pour commander le traitement mécanique du procédé de recyclage de fibres.

14. Une ligne de recyclage de fibres telle que revendiquée dans la revendication 9, **caractérisée en ce que** la ligne de recyclage de fibres comprend des dispositifs de mesure (120) pour mesurer, depuis la pâte de fibres recyclées, avant le sous-processus de mise en pâte, au moins un des éléments suivants : la vitesse de production, la teneur en cendres, la teneur en eau, et l'unité de commande est agencée, sur la base des résultats de mesure, pour commander le sous-processus de mise en pâte et / ou le sous-processus de dispersion.

15. Une ligne de recyclage de fibres telle que revendiquée dans la revendication 9, **caractérisée en ce que** les dispositifs de mesure (122 à 126) entre le sous-processus de mise en pâte (100) et le sous-processus de dispersion (104) et après le processus de dispersion (104) sont agencés pour mesurer soit le détachement de l'encre depuis un agent de remplissage et une pâte d'enduction ou pour mesurer la séparation de substances collantes dans la pâte de fibres recyclées, et l'unité de commande (108) du sous-processus de mise en pâte (100) et l'unité de commande (109) du sous-processus de dispersion (104) sont agencées pour régler, sur la base des résultats de mesure, le traitement mécanique de la pâte de fibres recyclées pour détacher l'encre ou les substances collantes au cours du sous-processus de mise en pâte (100) et du sous-processus de dispersion (104).

16. Une ligne de recyclage de fibres telle que revendiquée dans la revendication 9, **caractérisée en ce que** l'unité de commande (108) du sous-processus de mise en pâte (100) est alimenté en avant de l'unité de commande (109) du sous-processus de dispersion (104) pour prendre en compte la commande du sous-processus de mise en pâte (100) dans la commande du processus de dispersion (104).

FIG. 1

FIG. 2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9508019 A
- WO 2005103374 A
- WO 2005042831 A
- US 6010593 A
- CA 2414928 A1
- FI 113204
- US 6311550 B